# EUROPEAN PATENT APPLICATION

(11) **EP 3 527 506 A1**
(43) Date of publication of application: **21.08.2019**
(21) Application number: 19157687.5
(22) Date of filing: 18.02.2019
(51) Int. Cl.: B65G 1/04, B65G 1/10

(54) **HANDLING SYSTEM FOR MULTI-LEVEL WAREHOUSES AND MULTI-LEVEL WAREHOUSE COMPRISING SUCH HANDLING SYSTEM**

(30) Priority: 16.02.2018 IT 201800002748
(71) Applicant: Piazza, Antonio, 36015 Schio (VI) Vicenza (IT); Piazza, Marco, 36015 Schio (VI) (IT)
(72) Inventor: Piazza, Antonio, 36015 Schio (VI) Vicenza (IT); Piazza, Marco, 36015 Schio (VI) (IT)
(74) Representative: Autuori, Angelo

(57) **Abstract**

Handling system (10) for multi-storey warehouses, comprising: two lateral columnar elements (12, 13); an upper crosspiece body (14) for connection between the upper ends (12a, 13a) of the lateral columnar elements (12, 13); ground sliding means (15, 16); opposite means (17, 18) for lifting a body to be handled, each of which is constrained to slide on the corresponding lateral columnar element (12, 13); actuator means (19) for the translation of each lifting means (17, 18) with respect to the corresponding lateral columnar element (12, 13) to which it is constrained.

## Description

### Field of the invention

The invention regards a handling system for multi-level warehouses as well as a multi-level warehouse comprising such handling system.

### State of the Art

Currently known and widespread are multi-level warehouses of the 'cantilever' type, where this expression is used to indicate modular structures with cantilevered shelves in which the absence of uprights on the front side of the structure allows having a shelf without obstacles on the entire length suitable for storing long or out-of-gauge products, such as pipes, bars, sections, sheets, wood, reels or out-of-gauge pallets.

A cantilever structure comprises several rows of cantilevered shelves. Being arranged at different heights, such rows thus define a multi-level structure, i.e. suitable to provide several resting planes spaced in vertical direction.

Such cantilever warehouses are considered per se poorly suitable to store elements with strictly longitudinal extension, like the aforementioned pipes, bars, sections, drawn pipes and the like.

As a matter of fact, such elements with mainly longitudinal extension are normally stored in vertical or slightly inclined racks. On the other hand, the storage of such elements with mainly longitudinal extension in a cantilever warehouse is considerably difficult given that it is not easy to handle the elements with mainly longitudinal extension, both when loading an incoming product and when picking up a product from the warehouse.

In particular, cantilever warehouses are not suitable for storing elements with mainly longitudinal extension but with small cross-section, which tend to bend under their own weight when arranged vertically even if tied in bundles.

Similarly, cantilever warehouses are not suitable for storing elements with mainly longitudinal extension positioned horizontally, given that such elements with longitudinal extension and small cross-section tend to curve in the areas between two consecutive cantilevered shelves, where they have no resting elements.

Another problem observed in prior art cantilever warehouses lies in their considerable overall dimension, with a scarcely rational exploitation of the available space.

As a matter of fact, such warehouses occupy very large spaces, due to the need of having access corridors between two close structures of the cantilever type, suitable to allow a forklift, usually with forks, for handling the stored products or products to be stored, to pass through.

Forklifts usually have a driver on board, and thus the utilisation thereof requires employing manpower, whose cost must be taken into account.

Furthermore, no matter how compact and manoeuvrable a forklift or the like requires manoeuvring spaces that cannot be provided in a limited and sheltered environment, such as for example a shed, in which a warehouse is defined.

Such manoeuvre space limits the volume available for the installation of other cantilever structures in the same limited and sheltered environment, thus limiting the storage capacity of the warehouse.

Furthermore, the presence of personnel among the cantilever structures always exposes to the risk accidents, for example an erroneous handling of an object or a group of objects using a forklift or due to sudden seismic motions.

Documents DE3012826, JP2015-178396 and EP0798238 illustrate examples of known multi-level warehouses with cantilever structures.

### Summary of the invention

The task of the present invention is to provide a handling system capable of overcoming the aforementioned drawbacks and limits of the prior art.

In particular, an object of the invention is to provide a handling system that allows to automate the picking up and laying down of products from/in the warehouse, reducing risks for the personnel.

Another object of the invention is to provide a handling system capable of transferring products of the type with mainly longitudinal extension too.

A further object of the invention is to provide a handling system that is particularly suitable for warehouses of the multi-level cantilever type.

Still another object of the invention is to provide a multi-level warehouse comprising a similar handling system.

Another object of the invention is to provide a multi-level warehouse with smaller overall dimension with respect to the multi-storey warehouses of the known type.

A further object of the invention is to provide a multi-level warehouse that can be managed without deploying a lot of manpower.

The task and the objects mentioned above are attained by a handling system and/or by a multi-level warehouse according to what is described, illustrated and/or claimed herein.

The dependent claims describe advantageous embodiments of the invention.

### Brief description of the drawings

The aforementioned task and objects, alongside the advantages described hereinafter, are outlined in the description of an embodiment of the invention, provided solely by way of non-limiting example, with reference to the attached drawings wherein:
- figure 1 is a perspective view of a handling system according to the invention;
- figure 1a is a perspective view of the handling system of figure 1, in a first embodiment;
- figure 2 is a first perspective view of a detail of the handling system according to the invention;
- figure 3 is a second perspective view of the detail of figure 2;
- figure 4 is a cross-sectional view of a further detail of the handling system according to the invention;
- figure 5 is a perspective view of a second embodiment of the handling system according to the invention;
- figure 6 is a detail of figure 5;
- figure 7 is a perspective view of a second embodiment of the handling system according to the invention;
- figure 8 is a perspective view of a multi-level warehouse according to the invention;
- figure 9 is a perspective view of a multi-level warehouse according to the invention in an embodiment thereof;
- figure 10 is a lateral view of the multi-level warehouse of figure 9,
- figure 11 is a perspective view of a detail of the warehouse of figure 9,
- figure 12 is a perspective view of a detail of the multi-level warehouse according to the invention;
- figure 13 is a lateral view of the detail of figure 12;
- figure 14 is a schematic view of a further embodiment of the handling system, wherein the forks 610, 611 of the loading/unloading body 710 are in the first operative position;
- figures 15A and 15B are enlarged figures of some details of figure 14, wherein the forks 610, 611 of the loading/unloading body 710 are respectively in the inoperative position and in the second operative position opposite to the first operative position.

### Detailed description of some preferred embodiments

With reference to the aforementioned figures, a handling system for multi-storey warehouses is indicated in its entirety with number 10.

Such handling system comprises a portal 11, in turn comprising:
- two lateral columnar elements 12 and 13, each columnar element having an upper end 12a and 13a and an opposite lower end 12b and 13b,
- an upper crosspiece body 14, for connection between the upper ends 12a and 13a of the columnar elements 12 and 13,
- ground sliding means 15 and 16,
- opposite means 17 and 18 for lifting a body to be handled, each one of which is constrained to translate on a corresponding lateral columnar element 12 and 13 in the extension direction of the lateral columnar element 12 and 13, i.e. In the vertical or substantially vertical, with respect to a use configuration,
actuator means 19 for translating each lifting means 17 and 18 with respect to the corresponding element 12 or 13 to which it is constrained.

Each lateral columnar element 12 and 13 consists of two uprights 20 and 21, for example two tubular profiles, joined at the top part by a connection element 22, for example a tubular piece.

Each lateral columnar element 12 and 13 extends from a respective base 24.

The uprights 20 and 21 are supported by corresponding reinforcement tension rods 23.

Such reinforcement tension rods 23 are each fixed - at one end - to the top part of the corresponding upright 20 or 21, and - on the opposite end - to the base 24.

The upper crosspiece body 14 comprises, by way of example, two profiles with mainly longitudinal extension 25 and 26, parallel to each other, fixed to the ends 12a and 13a of the lateral columnar elements 12 and 13.

Such profiles with mainly longitudinal extension 25 and 26 are connected to each other by intermediate reinforcement elements 27, for example pieces of profiles.

The ground sliding means 15 and 16 are incorporated in the base 24.

Such ground sliding means, 15 just like 16, comprise at least two sliding wheels.

Such sliding wheels can be in line.

In the present non-limiting embodiment, the ground sliding means 15 and 16 provide for each two pairs of wheels 28, a pair of front wheels and a pair of rear wheels.

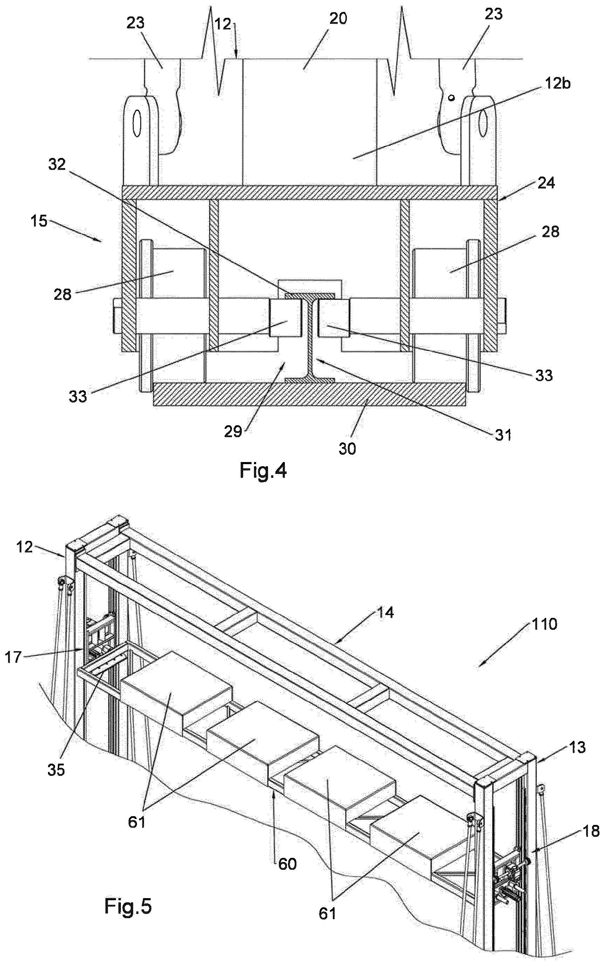

The ground sliding means are represented in figure 4, ground sliding means 15 of a first lateral columnar element 12 being represented in such figure 4, the ground sliding means 16 of the opposite second lateral columnar element 13 being deemed equal.

The wheels 28 are pivoted to the body of the base 24.

The ground sliding means 15 and 16 comprise wheels 28 shaped to slide on corresponding tracks 30, defining a track for the forward and backward movement of the handling system 10, for example with respect to one or more cantilever structures of a multi-level warehouse, as described hereinafter.

The ground sliding means 15 and 16 also have corresponding anti-overturning safety devices 29, clearly visible in figure 4.

An anti-overturning safety device 29 comprises, for example, a T-shaped or double-T-shaped longitudinal profile 31, as shown in figure 4.

The longitudinal profile 31 has an upper plate 32 suitable to oppose any lifting of a slider element 33 integrally joined to the base 24.

Such slider element 33 for example consists of a roller with rotation axis parallel to the rotation axis of the wheel 28.

The ground sliding means 15 and 16 are driven.

The drive means of the ground sliding means 15 and 16 comprise, for example, a gearmotor 34 configured to actuate a pair of wheels 28.

Alternatively, the gearmotor 34 is configured to actuate a pinion of a rack and pinion type of system, in which a rack and pinion is defined on the track 30.

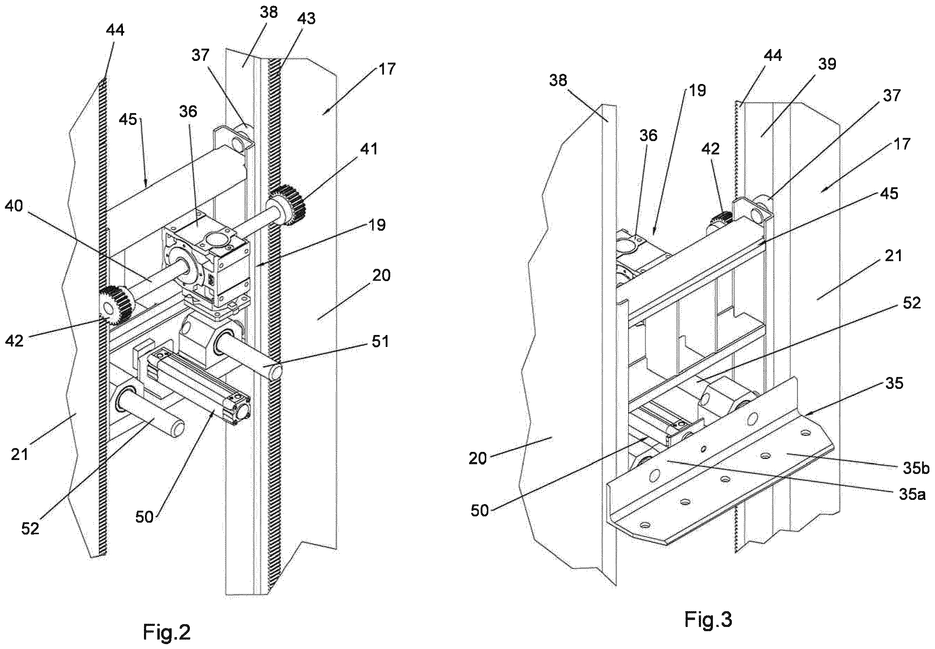

The means 17 and 18 for lifting a body to be handled are clearly visible in figures 2 and 3.

Of such lifting means 17 and 18 there are represented lifting means 17 regarding a first lateral columnar element 12, the opposite lifting means 18 being deemed equal.

Such lifting means 17, and thus 18 too, each comprise, in the present embodiment, a bracket 35 supported in a cantilevered fashion.

Such bracket 35 for example consists of an L-shaped element having a first wall 35a, configured for fixing to actuator means 19, and a second wall 35b, extending transversely to the first wall 35b, suitable to receive - resting thereon - a load so as to allow the lifting or lowering thereof.

The lifting means 17 and 18 each comprise a bearing framework 45 on which the bracket 35 and a motor 36 are mounted.

The bearing framework 45 has at least four wheels 37 suitable to slide two-by two in a corresponding guide profile 38 or 39, of two opposite guide profiles 38 and 39, each of such guide profiles 38 and 39 extending along a respective upright 20 and 21, as shown in figure 2 and 3.

The actuator means 19 of the two lifting means 17 e 18 each comprise a rack and pinion device, actuated by the corresponding motor 36 which is fixed to the bearing framework 45.

In particular, in the present embodiment, the actuator means 19 comprise a motor 36 with a double-output shaft 40, configured for actuating two opposite pinions 41 and 42, each of which is meshed with a respective rack and pinion 43 and 44, fixed to a corresponding upright 20 or 21.

Thanks to such actuator means 19, the lifting means 17 and 18 can translate on the respective lateral columnar element 12 or 13, from the bottom upwards and vice versa.

The operation of the motors 36 shall be deemed controllable using the electronic and computer systems of the known type.

The lifting means 17 and 18 each comprise also a gripping actuator 50, configured to translate the bracket 35 in a transversal direction with respect to the movement direction of the bearing framework 45.

The gripping actuator 50 is fixed to the edge of the respective bearing framework 45.

In particular, such gripping actuator 50 is configured to operate in a direction substantially orthogonal to the displacement direction of the bearing framework 45.

In particular, such gripping actuator 50 is configured to operate in horizontal direction.

In the present embodiment, the gripping actuator 50 consists of a fluid-dynamic cylinder, whose stem supports the bracket 35.

Present on the sides of the gripping actuator 50 are two guide stems 51 and 52, cooperating to support the bracket 35 alongside the stem of the fluid-dynamic cylinder.

Thanks to the gripping actuators 50 the handling system 10 is capable of lifting a body by simply placing the ends of the body to be lifted on the two opposite brackets 35.

Furthermore, thanks to the gripping actuators 50, the handling system 10 is capable to operate - in a gripping manner - on an object of group of objects to be handled, i.e. it is capable of lifting a body by grasping it by means of the two brackets 35, each pushed in an opposite direction with respect to the other bracket 35, in the same direction, and thus used to operate as two opposite clamps of a vice, i.e. by exercising two juxtaposed thrusts on the body to be lifted, the body being interposed between the two brackets 35, and which is thus gripped.

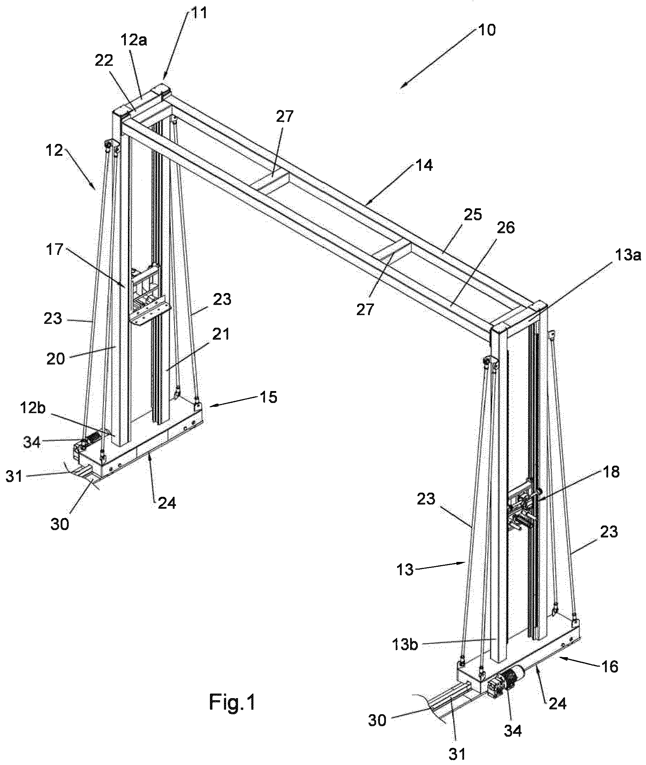

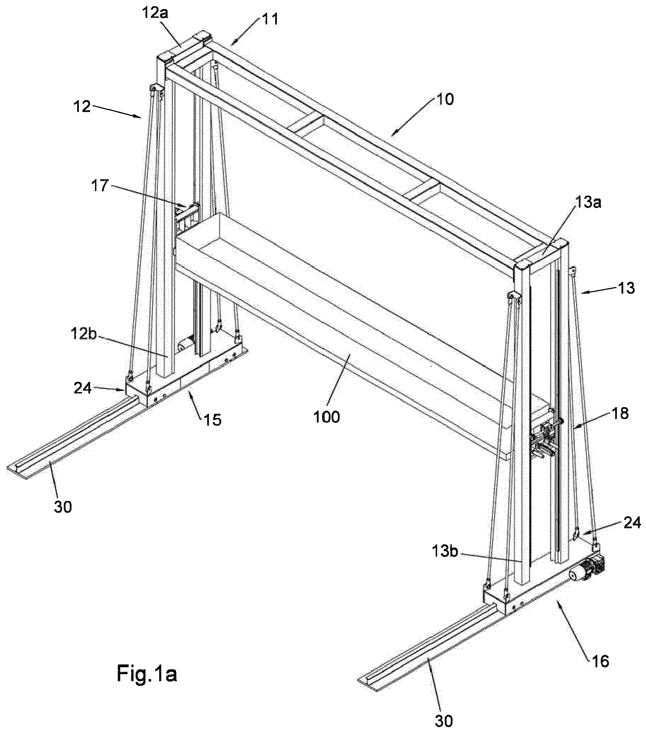

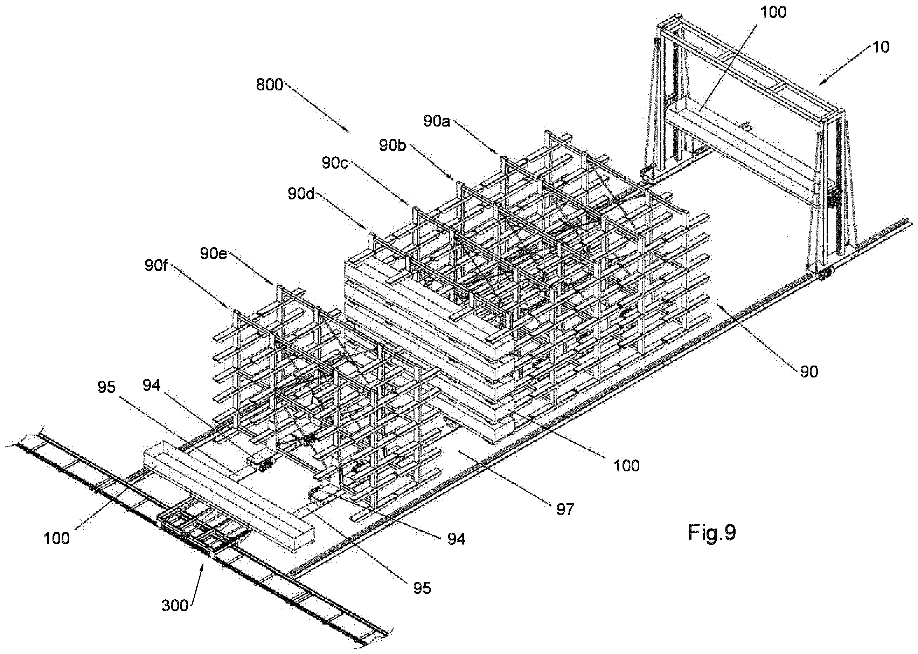

A similar handling system 10 can be used for lifting and handling a box-shaped container 100, as clearly visible in figure 1a and as exemplified in figure 9.

Thus, in a first embodiment of a handling system, still indicated with 10 in figure 1a, the handling system 10 comprises, between the brackets 35 of the lifting means 17 and 18, a box-shaped container 100, with length such to rest with the ends thereof each on one of the two opposite brackets 35.

A similar box-shaped container 100 can for example be configured for containing a plurality of elements with mainly longitudinal extension, for example of the small cross-section type, or other objects of dimensions such to be placed inside such box-shaped container 100.

Such box-shaped container 100 is particularly useful so as to be able to utilise a cantilever structure, provided with spaced cantilevered shelves which define discontinuous resting planes, even for storing objects whose dimensions are such not to be able to stably rest on two horizontally consecutive cantilevered shelves; as a matter of fact, the bottom of the box-shaped container defines the continuous resting plane that is not defined by the cantilevered shelves.

Small-size longitudinal elements, which would normally bend if stored in vertical position, or if stored horizontally simply resting on the cantilevered shelves of a cantilever structure, once placed in a box-shaped container 100 shaped to contain them, are no longer subject to bending problems and they are quick to store or retrieve by moving the container 100 in which they are kept.

In a second embodiment of the handling system, indicated with 110 in figure 5, the lifting means 17 and 18 comprise, between the brackets 35, a lifting crosspiece 60, with length such to rest with the ends thereof each on one of the two opposite brackets 35.

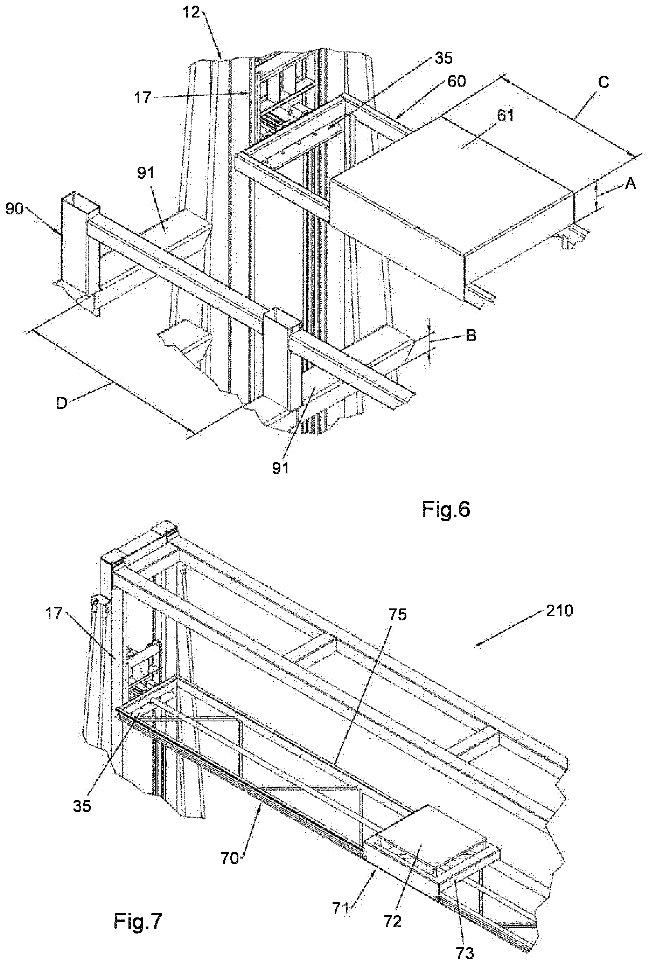

Such lifting crosspiece 60 comprises one or more loading/unloading bodies 61 shaped in a manner such that its height A, in the vertical direction, is greater than the height B, in the same vertical direction, of a cantilevered bracket 91 of a cantilever structure 90, as exemplified in figure 6.

Each loading/unloading body 61 is shaped so as to have a width C, in a horizontal direction that extends from one bracket 35 to the other, with smaller value with respect to the minimum distance D in the same direction between two subsequent cantilevered shelves 91 of a cantilever structure 90, as exemplified in figure 6.

A lifting crosspiece 60 for example comprises at least two loading/unloading bodies 61, and for example four loading/unloading bodies 61.

Such loading/unloading bodies 61 for example have an upper flat surface, designated for contact with the object, or group of objects, to be displaced.

Such lifting crosspiece 60 is suitable to facilitate the lifting and handling of an object with mainly longitudinal extension, or of a group of objects with mainly longitudinal extension, for example gathered in a bundle, which cannot be contained in a box-shaped container 100 as described above; as a matter of fact, a similar longitudinal object, or group of objects, requires a particular support from beneath that is as least discontinuous as possible.

Having a height A greater than the height B of the cantilevered shelves 91, when they are carried beneath the object to be lifted and displaced upwards between the cantilevered shelves 91, specifically due to their height A the loading/unloading bodies 61, are capable of lifting the object from the resting against the cantilevered shelves 91.

The movement of the handling system 110 on the tracks 30 determines the receding of the object to be handles off-the-gauge with respect to the cantilevered shelves 91, in a position where such object can be lifted, or lowered, by actuating the lifting means 17 and 18, on which the lifting crosspiece 60 rests.

In a second embodiment of the handling system, indicated with 210 in figure 7, the lifting means 17 and 18 comprise, between the brackets 35, a lifting crosspiece 70, with length such to rest with the ends thereof each on one of the two opposite brackets 35.

Such lifting crosspiece 70 comprises a moveable loading/unloading body 71, driven to slide on a framework 75.

Such moveable loading/unloading body 71 comprises:
- a carriage 73 configured to slide on the framework 75 of the lifting crosspiece 70, in the direction of the length of the latter,
- and an upper plate 72, connected to the carriage 73 through means for the vertical translation of such upper plate 72.

Such upper plate 72 has a flat upper resting surface, designated for contact with an object to be handled.

The carriage 73 slides on the framework 75 of the lifting crosspiece 70 through actuator means of the per se known type, for example a spiral and worm screw system, or through a rack and pinion system, or any other similar and equivalent system.

The upper plate 72 can be displaced upwards using actuator means configured to bring such upper plate 72 to a greater height with respect to the height B, previously represented in figure 6, of a cantilevered bracket 91 of a cantilever structure 90.

Such actuator means shall be deemed of the known type, for example, a fluid-dynamic cylinder, and they are not illustrated for the sake of simplicity.

Such lifting crosspiece 70 is suitable to facilitate the lifting and the handling of an object with mainly two-dimensional or three-dimensional extension that is arranged between two cantilevered shelves 91 of a cantilever structure 90, stored adjacent to other similar or different objects; a similar object, such as a parallelepiped-shaped box for example, or a reel-like cylindrical body, must actually be lifted, and then picked up and displaced, alone, without the other objects stored beside them being picked up too.

Having a height A that is variable up to becoming greater than the height B of the cantilevered shelves 91, when it is brought beneath the object to be lifted and its upper plate 71 is displaced upwards between the cantilevered shelves 91, The moveable loading/unloading body 71, specifically due to its variable height A, the loading/unloading body 71, is capable of lifting the object from the resting on the cantilevered shelves 91.

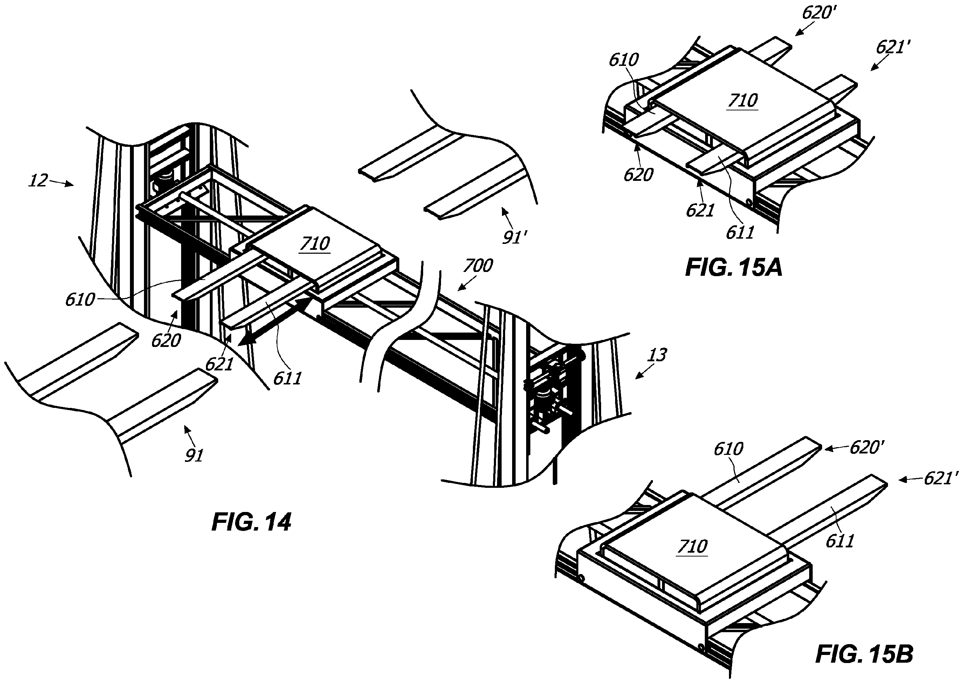

In a further embodiment of the handling system, illustrated by way of non-limiting example in figures 14, 15A and 15B, the loading/unloading body 710 may comprise at least one moveable pair of forks 610, 611 for loading / unloading the body to be handled, for example a europallet, from / on two or more consecutive cantilevered shelves 91, 91'.

In particular, the loading/unloading body 710 will be suitable to load/unload the body to be handled on /from two or more first cantilevered shelves 91 and on/from two or more second cantilevered shelves 91' facing the first.

To this end, the ends 620, 621; 620', 621' of the forks 610, 611, which are suitable to load /unload the body to be handled from the / on the cantilevered shelves 91, 91' will remain faced to the latter, will be able to move between an inoperative position, illustrated in FIG. 15A, and two operative positions, a first operative position illustrated for example in FIG. 14 and a second operative position opposite to the first illustrated for example in FIG. 15B, in which the forks 610, 611 will be susceptible to be loaded by the body to be handled.

The ends 620, 621; 620', 621' of the forks 610, 611 during use, i.e. when loading / unloading the body to be handled from the / on the first and second cantilevered shelves 91, 91', will remain respectively faced to the latter.

As illustrated in FIG. 15A, in the inoperative position the ends 620, 621; 620', 621' of the forks 610, 611 will be in distal position respectively with respect to the first and to the second cantilevered shelves 91, 91', so as to allow an easy displacement of the lifting crosspiece 70 between the cantilevered shelves 91, 91' of two consecutive cantilever structures.

As illustrated in FIG. 14, in the first operative position the ends 620, 621 of the forks 610, 611 will be proximal to the first cantilevered shelves 91. As illustrated in FIG. 15B, furthermore, in the second operative position the ends 620', 621' of the forks 610, 611 will be proximal to the second cantilevered shelves 91'.

Thanks to the characteristics outlined above, a single loading/unloading body 710 may load / unload a body to be handled resting on two or more consecutive first cantilevered shelves 91 consecutive and/or on two or more consecutive second cantilevered shelves 91'.

Furthermore, the aforementioned embodiment allows to minimise the passage corridors between the cantilever structures, irrespective of whether they are fixed or temporary corridors.

It is clear that even though figures 14, 15A and 15B show forks 610, 611 suitable to load / unload a body to be handled on cantilevered shelves of cantilever structures arranged on opposite sides with respect to the handling system, the forks 610, 611 may also be moveable on only one side without departing from the scope of protection of the attached claims.

In other words, the forks 610, 611 may possibly be suitable to load / unload a body to be handled on cantilevered shelves arranged on only one cantilever structure, for example the first cantilevered shelves 91 or the second cantilevered shelves 91'.

Possibly, on a single loading/unloading body there may be arranged two pairs of forks, a first pair suitable load / unload a body to be handled on first cantilevered shelves arranged on a cantilever structure and a second pair suitable to load / unload a body to be handled on second cantilevered shelves arranged on an opposite cantilever structure. The two pairs of forks may for example be moveable horizontally in opposite directions.

Furthermore, it is clear that even though in figures 14, 15A and 15B the forks 610, 611 are telescopic, i.e. they are moveable in a horizontal or substantially horizontal plane, any relative position of the forks 610, 611 in inoperative position may be provided for.

For example, the forks 610, 611 in inoperative position may lie in a substantially vertical or transversal plane with respect to the horizontal, and they may rotate around an axis substantially parallel to the extension axis of the lifting crosspiece 70 to reach the first operative position illustrated for example in FIG. 14.

On the other hand, the forks 610, 611 in inoperative position may lie parallel to the lifting crosspiece 70, and they may rotate around a vertical axis to reach the operative position illustrated for example in FIG. 14.

More generally, the forks 610, 611 may be driven by any motion between the operative position or the operative positions and the inoperative position and they may take any position in the latter, and in particular in the inoperative position, without departing from the scope of protection of the attached claims.

It is also clear that the embodiment of the loading/unloading body 710 may be both fixed and moveable, without departing from the scope of protection of the attached claims.

For example, the embodiment of the loading/unloading body 710 may be implemented, as illustrated for example in FIG. 14 it may be implemented both in a lifting crosspiece 60 with one or more fixed loading/unloading bodies and in a lifting crosspiece 70 with one or more moveable loading/unloading bodies.

For example, a lifting crosspiece 60 with the fixed loading/unloading bodies may provide for one or more of the fixed loading/unloading bodies configured as the loading/unloading body 710 illustrated above and the other fixed loading/unloading bodies configured as in FIG. 6.

On the other hand, a lifting crosspiece 70 with moveable loading/unloading bodies may provide for one or more moveable loading/unloading bodies configured as the loading/unloading body 710 illustrated above, for example a single moveable loading/unloading body 710.

A multi-level warehouse 80 may comprise a handling system 10 or 110 or 210 as described above.

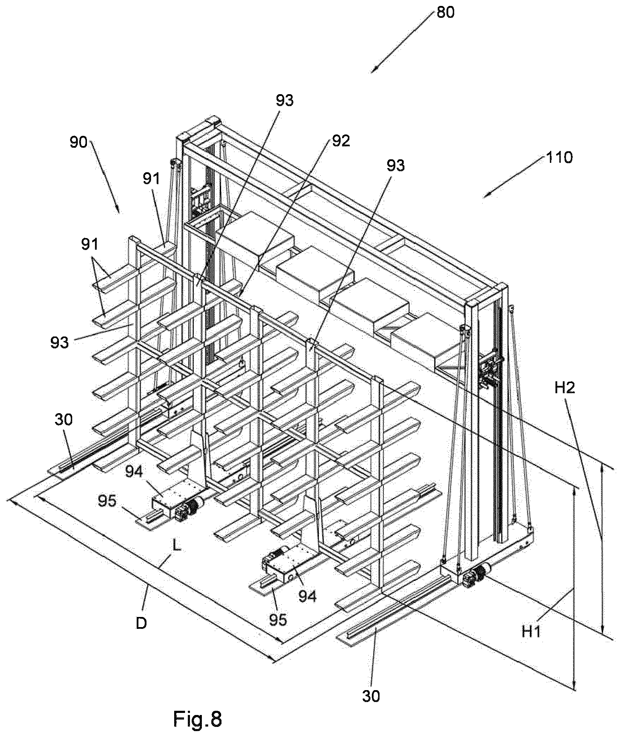

Such multi-level warehouse 80 comprises a handling system 10 or 110 or 210 and one or more cantilever structures 90, wherein, as indicated in figure 8:
- the minimum distance D' between the lateral columnar elements 12 and 13 of the handling system 10, 110, 210 is greater than the width L of the one or more cantilever structures 90,
- the lifting means 17 and 18 are configured to be displaced at a transfer height H2, greater than the height H1 of said one or more cantilever structures 90.

Thanks to a similar combination of characteristics, the handling system 10 or 110 or 210 is shaped in a manner such to slide at the one or more cantilever structures, surrounding them, as clearly specified in figure 8, and thus carrying the load, i.e. An object or group of objects, or a container 100, above the one or more cantilever structures 90.

The handling system 10 or 110 or 210 slides on first tracks 30.

In the embodiment of figure 9, the multi-level warehouse 800 comprises a plurality of cantilever structures 90, 90a, 90b, 90c, 90d, 90e, 90f, arranged side-by-side.

Each cantilever structure 90 comprises a framework 92 with uprights 93, the cantilevered shelves 91 extending from such cantilevered shelves.

In particular, such cantilever structures 90, 90a, 90b, 90c, 90d, 90e, 90f, each have shoes 94 for sliding on corresponding second tracks 95.

Then cantilever structures 90, 90a, 90b, 90c, 90d, 90e slide on the same second tracks 95.

The shoes 94 may be provided with a motor on board, for translating the cantilever structure 90 on the second tracks 95.

Alternatively, for the translation of a cantilever structure 90 on the second tracks 95, the warehouse 80 or 800 comprises a driven mechanism 96 of the rotary type.

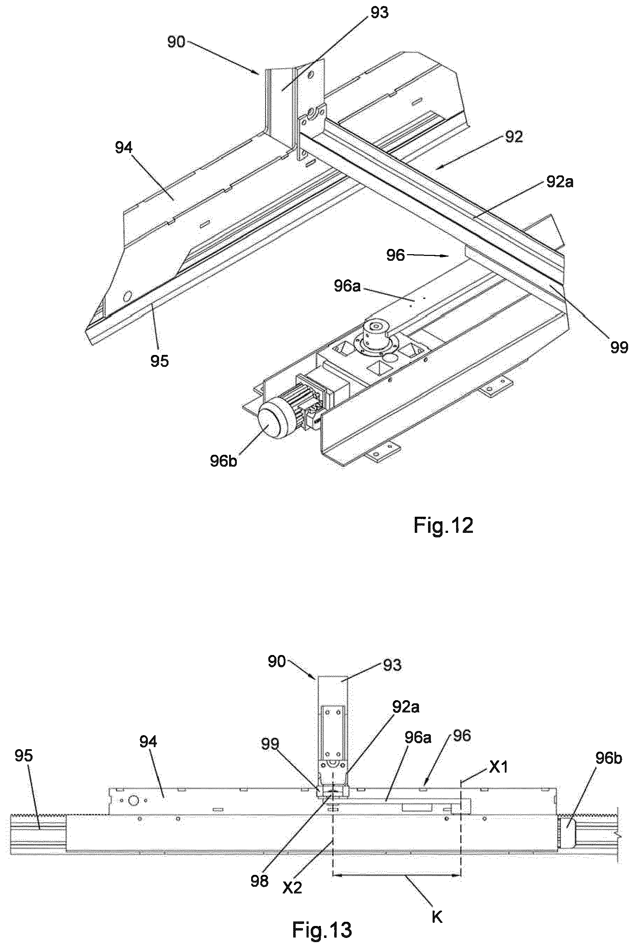

Such driven mechanism 96, exemplified in figure 12, comprises a drive crank 96a driven ion rotation by a gearmotor 96b.

Such drive crank 96a supports, for example and preferably at an end thereof, a push and pull slider 98, clearly visible in figure 13.

Such push and pull slider 98 is driven to slide in a guide profile 99 fixed to the cantilever structure 90, for example beneath the lower crosspiece 92a of such cantilever structure 90.

The gearmotor 96b is fixed to the ground for example by means of brackets.

The driven mechanism 96 allows to displace a cantilever structure 90 using only one motor, i.e. with a single gearmotor 96b, instead of with a motor for each shoe 94 of the shoes 94 of a cantilever structure.

Such driven mechanism 96 determines the translation of cantilever structure 90 on the second tracks 95 between two limit positions distant from each other by twice the distance K between the rotation axis X1 of the drive crank 96a with respect to the gearmotor 96b and the rotation axis X2 of the slider 98.

The length of the drive crank 96a is thus such to allow translations of the cantilever structure 90 which allow the opening of pre-established temporary corridors.

Such distinctive driven mechanism 96 allows to obtain, at the start of translation of a connected cantilever structure 90, maximum acceleration with the minimum speed, and vice versa, so as to have a smooth and constant displacement of the cantilever structure 90.

The second tracks 95 are arranged, parallel to each other, between the first tracks 30.

The cantilever structures 90, 90a, 90b, 90c, 90d, 90e, 90f, preferably have the same length L and the same height H1.

The cantilever structures 90, 90a, 90b, 90c, 90d, 90e, 90f can thus be translated on the second tracks 95 independently with respect to the other.

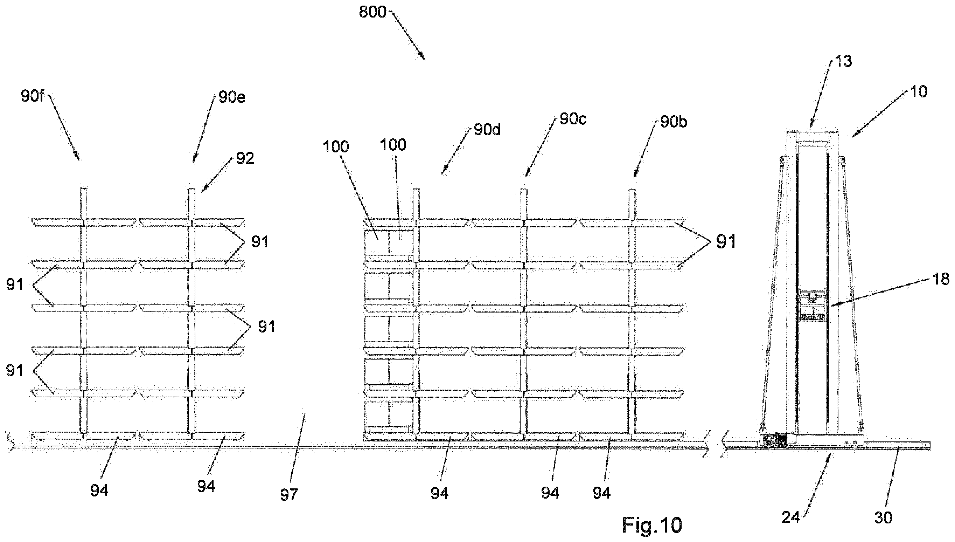

The multi-level warehouse 800 is thus configured to take:
- a minimum overall dimension configuration in which all the cantilever structures 90, 90a, 90b, 90c, 90d, 90e are arranged adjacent to each other, as exemplified for the cantilever structures 90, 90a, 90b, 90c, 90d in figures 9 and 10,
- or a temporary opening configuration, in which one or more cantilever structures, for example the cantilever structures 90e and 90f in figures 9 and 10, are spaced from the rest of the cantilever structures 90, 90a, 90b, 90c, 90d, which maintain the minimum overall dimension configuration, thus creating a temporary corridor 97.

The expression 'temporary corridor' is used to indicate a space determined by the relative moving away between two consecutive cantilever structures the space being suitable for the transit of lifting means 17 and 18 of the handling system 10 or 110 or 210, possibly carriers or a box-shaped container 100, or a lifting crosspiece 60 or 70, the space suitable for transit remaining open for the time useful for the laying down or picking up operations by the handling system 10 or 110 or 210, and thus closing again in favour of greater compactness of the warehouse of for allowing the opening, between two different cantilever structures of the same warehouse, of another temporary corridor.

Such embodiment with temporary corridors is particularly advantageous, given that it allows minimising the overall dimensions of the multi-level warehouse 80. However, it is clear that the latter may have corridors between the cantilever structures both fixed and temporary without departing from the scope of protection of the attached claims.

The handling system 10 or 110 or 210 may be actuated in a manner such to slide on the first tracks 30, with the lifting means 17 and 18 positioned at the transfer height H2 greater than the height H1 of the cantilever structures, up to being positioned at the temporary corridor 97.

When it is at the temporary corridor 97, the handling system 10 or 110 or 210 is controlled so that the lifting means 17 and 18 act to lift, or grasp, from a plane of cantilevered shelves 91 a container 100, or an object with mainly longitudinal extension, or group of objects with mainly longitudinal extension.

Once the object or group of objects or the container 100 is removed from a cantilever structurer, the handling system 10 or 110 or 210 is controlled so as to lift the load above the height of the cantilever structure, so as to be able to slide on the first tracks 30 towards a loading area where the object or group of objects or container 100 is placed

In a preferred but non-exclusive embodiment, the multi-level warehouse 80 has one or more reception and sorting shuttles 300.

Such shuttle 300 is configured to receive- resting thereon - a load carried by the handling system 10 or 110 or 210 and then displace it to another area of the environment for subsequent operations.

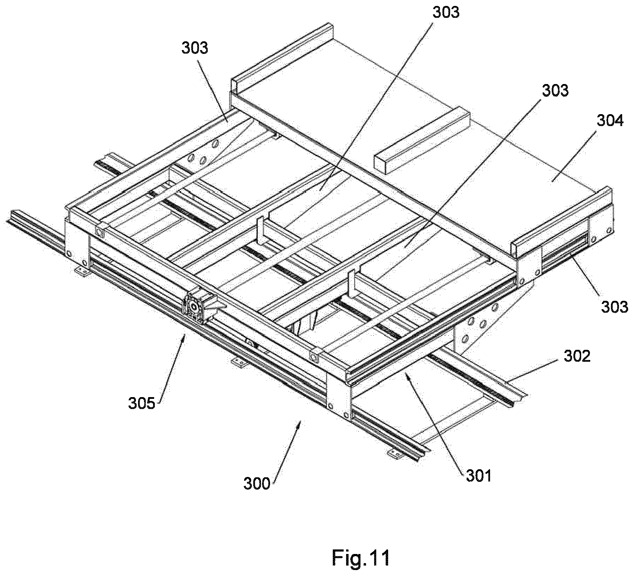

Such shuttle 300 for example comprises, a carriage 301 driven to slide on third tracks 302, as clearly visible in figure 11.

Such third tracks 302 are positioned according to a transversal direction with respect to the first tracks 30 and to the second tracks 95.

The carriage 301 has a series of cantilevered arms 303, extending towards the area of the cantilever structures, arranged side-by-side to define a horizontal od substantially horizontal resting plane.

Such cantilevered arms 303 are mutually spaced in the horizontal direction by a distance such to allow the introduction - between two consecutive cantilevered arms 303 - of a loading/unloading body 61 or of a moveable loading/unloading body 71, as described above regarding the handling systems 110 and 210.

Such cantilevered arms 303 allow the handling system 10 or 110 or 210 to reach above the cantilevered arms 303 thus preventing the first tracks 30, on which the handling system slides, from intersecting the third tracks 302 on which the shuttle 300 slides.

Thus, the handling system 110 or 210 may rapidly unload the object picked up from a cantilever structure of the warehouse directly on the cantilevered arms 303 of such shuttle 300.

Alternatively, the shuttle 300 has a resting table 304, fixed above the cantilevered arms 303, for example useful for the resting of a box-shaped container 100, as shown in figure 9.

The support table 304 may be moveable.

The resting table 304 for example has sliding rollers on two outermost opposite cantilevered arms 303.

In such case, the shuttle 300 has actuator means for the translation of the resting table 304 from a lateral loading configuration, like in figure 11, to a central transfer configuration, not illustrated for the sake of simplicity.

In the cantilevered position, i.e. Translated laterally towards the free end of the cantilevered arms 303, the resting table 304 allows the handling system 10 or 110 or 210 to reach above the table 304 thus preventing the first tracks 30, on which the handling system slides, from intersecting the third tracks 302 on which the shuttle slides 300, interfering with the latter.

Such actuator means for the translation of the resting table 304 shall be deemed of the per se known type, such as for example the spiral and worm screw device 305.

It is clear that the multi-level warehouse 80 may have a reception and sorting shuttle 300 irrespective of whether the corridors between the cantilever structures are fixed or temporary, without departing from the scope of protection of the attached claims.

Basically, it has been observed that the invention attains the pre-set objects.

In particular, the invention provided a handling system capable of overcoming the aforementioned drawbacks and limits of the prior art.

In particular, the invention provided a handling system capable of allowing the automation of the picking up and laying down of products from/onto a warehouse, thanks to the driven sliding means and the ground sliding means.

Furthermore, the invention provided a handling system capable of also transferring products of the type with mainly longitudinal extension, thanks to the distinctive distance between its lateral columnar elements greater than the corresponding width of a cantilever structure of an associated multi-level warehouse.

Furthermore, the invention provided a handling system that is particularly suitable for warehouses of the multi-level cantilever type, capable of transferring an object or a group of objects or a box-shaped container, above the cantilever structures that form the multi-level warehouse.

Still, the invention provided a multi-level warehouse comprising a similar handling system.

Furthermore, a preferred but non-exclusive embodiment of the invention provided a multi-level warehouse with smaller overall dimensions with respect to the multi-level warehouses of the known type, thanks to cantilever structures that can be translated independently from each other so as to take either a minimum overall dimension configuration, in which all the cantilever structures are close to each other, or a temporary opening configuration in which there is determined a temporary corridor for the access of a handling system to a cantilever structure for picking up or storing an object, or a group of objects, or a box-shaped container.

Furthermore, the invention provided a multi-level warehouse that can be managed under safe conditions, eliminating the typical risks relating to operator passing between the cantilever structures.

The invention thus conceived is susceptible to numerous modifications and variants, all falling within the inventive concept; furthermore, all details can be replaced by other technically equivalent elements.

Basically, the components and materials used, provided they are compatible with the specific use, as well as the dimensions and contingent shapes, may vary depending on the technical needs and the state of the art.

Should the technical characteristics mentioned in any of the claims be followed by reference signs, such reference signs will be deemed to have been added with the sole purpose of increasing the understanding of the claims and thus such reference signs shall not be deemed to limit the interpretation of each element identified by such reference signs by way of example.

## Claims

1. A handling system for a body to be handled designated to be stored in a multi-level warehouse, in particular a multi-level warehouse including one or more cantilever structures (90), the handling system comprising a portal (11) which includes:
- two lateral columnar elements (12, 13), each lateral columnar element (12, 13) having an upper end (12a, 13a) and an opposite lower end (12b, 13b);
- an upper crosspiece body (14) for connection between the upper ends (12a, 13a) of said lateral columnar elements (12, 13);
- ground sliding means (15, 16);
- opposite means (17, 18) for lifting a body to be handled, each of which are constrained to translate on a said corresponding lateral columnar element (12, 13) in the extension direction of the same lateral columnar element (12, 13);
- actuator means (19) for translating each lifting means (17, 18) with respect to the corresponding lateral columnar element (12, 13) to which it is constrained.

2. Handling system according to claim 1, that can be used with a box-shaped container (100) and/or with a lifting crosspiece (60, 70) which includes one or more loading/unloading bodies (61, 71, 710) for the body to be handled, the box-shaped container (100) and/or the lifting crosspiece (60, 70) having a predetermined length, wherein each of said lifting means (17, 18) comprises a respective bracket (35) for the support of the box-shaped container (100) and/or of the lifting crosspiece (60, 70).

3. Handling system according to claim 2, wherein each of said brackets (35) consists of an L-shaped element having a first wall (35a) operatively connected with said actuator means (19) and a second wall (35b) extending transversely with respect to said first wall (35a), said second wall (35b) having a resting surface for the box-shaped container (100) and/or the lifting crosspiece (60, 70).

4. Handling system according to claim 2 or 3, wherein said brackets (35) are mutually faced and opposite, said brackets (35) further being arranged at a mutual distance such that the box-shaped container (100) and/or the lifting crosspiece (60, 70) rests with each of the ends thereof on one of the two opposite brackets (35), said lifting means (17, 18) further comprising a respective grip actuator (50) operatively connected with a respective bracket (35) to translate it along a transversal direction with respect to said extension direction of the respective lateral columnar element (12, 13).

5. Multi-level warehouse (80, 800), comprising:
- a handling system (10) according to one or more of claims 1 to 4,
- and one or more cantilever structures (90), wherein:
- the minimum distance (D) between the lateral columnar elements (12, 13) of the handling system (10) is greater than the width (L) of the one or more cantilever structures (90);
- the lifting means (17, 18) are configured to be displaced at a transfer height (H2) greater than the height (H1) of said one or more cantilever structures (90).

6. Multi-level warehouse (80, 800) according to the preceding claim, further comprising a plurality of cantilever structures (90, 90a, 90b, 90c, 90d, 90e, 90f) arranged adjacent to each other, said cantilever structures (90, 90a, 90b, 90c, 90d, 90e, 90f) being slidable on tracks (95) independently with respect to each other, so that the multi-level warehouse is moveable between a minimum overall dimension configuration wherein all the cantilever structures (90, 90a, 90b, 90c, 90d, 90e) are arranged adjacent to each other and a temporary opening configuration, wherein one or more mutually separated cantilever structures (90e, 90f) are spaced from the remaining cantilever structures (90, 90a, 90b, 90c, 90d) to create a temporary corridor (97) that can be occupied by said handling system (10) for picking up / laying down the body to be handled on the cantilever structures (90e, 90f).

7. Multi-level warehouse (80, 800) according to claim 5 or 6, wherein at least one of said cantilever structures (90, 90a, 90b, 90c, 90d, 90e, 90f) includes a driven mechanism (96) of the rotary type which includes a rotary drive crank (96a) operatively connected with a push and pull slider (98) slidably coupled with said at least one of said cantilever structures (90, 90a, 90b, 90c, 90d, 90e, 90f).

8. Multi-level warehouse (80, 800) according to claim 5, 6 or 7, wherein said handling system (10) further comprises a box-shaped container (100) and/or a lifting crosspiece (60, 70) which includes at least one loading/unloading body (61, 71) for the body to be handled.

9. Multi-level warehouse (80, 800) according to the preceding claim, wherein each of said cantilever structures (90, 90a, 90b, 90c, 90d, 90e, 90f) has a plurality of cantilevered shelves (91) each having a predetermined height (B) and a minimum distance (D) from the adjacent cantilevered shelf, said handling system (10) comprising said lifting crosspiece (60, 70), said at least one loading/unloading body (61, 71) having a height (A) greater than the height (B) of the cantilevered shelf (91) and a width (C) smaller than the minimum distance (D)between two adjacent cantilevered shelves (91), so that said at least one loading/unloading body (61, 71) can handle the body to be handled resting on at least two consecutive cantilevered shelves.

10. Multi-level warehouse (80, 800) according to claim 8 or 9, wherein each of said cantilever structures (90, 90a, 90b, 90c, 90d, 90e, 90f) has a plurality of cantilevered shelves (91), said handling system comprising said lifting crosspiece (700), said at least one loading/unloading body (710) having at least one pair of forks (610, 611) each having at least one respective first end (620, 621) designated - in use - to remain faced to said cantilevered shelves (91), said at least one pair of forks (610, 611) being selectively moveable between one inoperative position in which the corresponding end (620, 621) are distal from said cantilevered shelves (91) and at least one operative position wherein the same ends (620, 621) are proximal to said cantilevered shelves (91) to handle a body to be handled arranged on at least two consecutive cantilevered shelves (91).

11. Multi-level warehouse (80, 800) according to claim 8, 9 or 10, wherein said lifting crosspiece (60, 70) is designated to be handled between a first and a second of said cantilever structures (90, 90a, 90b, 90c, 90d, 90e, 90f) facing each other having respective first and second cantilevered shelves (91, 91'), said forks (610, 611) each having a respective first end (620, 621) designated - in use - to remain faced to said first cantilevered shelves (91) and a second opposite end (620', 621') designated - in use - to remain faced to said second cantilevered shelves (91), said at least one pair of forks (610, 611) being selectively moveable between:
- an inoperative position wherein the first and the second ends (620, 621; 620', 621') are respectively distal from said first and said second cantilevered shelves (91, 91');
- at least one first operative position wherein the first ends (620, 621) are proximal to the first cantilevered shelves (91);
- at least one second operative position opposite to the first wherein the second ends (620', 621') are proximal to the second cantilevered shelves (91);
so that said loading/unloading body (710) can handle a body to be handled resting on at least two consecutive first cantilevered shelves (91) and/or on at least two consecutive second cantilevered shelves (91).

12. Multi-level warehouse (80, 800) according to claim 8, 9, 10 or 11, wherein said at least one loading/unloading body (71) is a single loading/unloading body (71) slidable along said lifting crosspiece (70) and lockable in a plurality of operative positions facing said cantilevered shelves (91), so that said at least one loading/unloading body (61, 71) can selectively handle a body to be handled resting on two consecutive cantilevered shelves without handling possible adjacent bodies resting on the adjacent cantilevered shelves.

13. Multi-level warehouse (80, 800) according to any one of claims 5 to 12, wherein the multi-level warehouse (80, 800) is installed in a first area of an environment, the multi-level warehouse (80, 800) further comprising at least one reception and sorting shuttle (300) susceptible to receive - resting thereon - the body to be handled carried by said handling system (10) to displace it to a second area of the environment spaced from said first area.

14. Multi-level warehouse (80, 800) according to the preceding claim, wherein said handling system (10) is slidable along first tracks (30) defining a first predetermined direction, said at least one reception and sorting shuttle (300) being slidable along second tracks (302) defining a second predetermined direction, said first and second predetermined direction preferably being transversal to each other and even more preferably substantially perpendicular to each other so that the reception and sorting shuttle (300) can slide in one or both directions of said second predetermined direction.

15. Multi-level warehouse (80, 800) according to claim 14, wherein said at least one reception and sorting shuttle (300) comprises a table (304) for resting the body to be handled, said resting table (304) being moveable between a lateral loading position in which it is arranged laterally with respect to said second tracks (302) and a central transfer position in which it is arranged substantially above said tracks (302) so as to allow said handling system (10) to rest the body to be handled on the resting table (304) when the latter is in said loading position preventing the tracks (30)on which the handling system (10) moves from intersecting said second tracks (302) and so as to allow the transfer of the body to be handled preventing the reception and sorting shuttle (300) from overturning.
